# EUROPÄISCHE PATENTSCHRIFT

(11) **EP 2 288 949 B1**
(45) Veröffentlichungstag und Bekanntmachung des Hinweises auf die Patenterteilung: **16.04.2014**
(21) Anmeldenummer: 09761376.4
(22) Anmeldetag: 19.05.2009
(51) Int. Cl.: G02B 6/38, G02B 6/44, H01R 13/58

(54) **ZUGENTLASTUNG**
STRAIN RELIEF DEVICE
DISPOSITIF DE DÉCHARGE DE TRACTION

(30) Priorität: 09.06.2008 DE 102008027380
(43) Veröffentlichungstag der Anmeldung: 02.03.2011
(73) Patentinhaber: Tyco Electronics Services GmbH, 8200 Schaffhausen (CH)
(72) Erfinder: HETZER, Ulrich, 12679 Berlin (DE); KOPF, Pia, 13595 Berlin (DE)
(74) Vertreter: Patentanwälte Bressel und Partner mbB
(86) Internationale Anmeldenummer: PCT/EP2009/003553
(87) Internationale Veröffentlichungsnummer: WO 2009/149813

(56) Entgegenhaltungen:
- DE-U1- 9 302 960
- GB-A- 2 042 817
- GB-A- 2 222 698
- US-A1- 2006 285 811

## Beschreibung

Die Erfindung betrifft eine Zugentlastung für Kabel, insbesondere von Glasfaserkabeln mit Kevlar-Fasern.

Insbesondere bei Glasfaserkabeln mit Kevlar-Fasern (Aramid-Fasern) als mechanische Schutzelemente stellt sich das Problem, das Kabel mechanisch zu befestigen. Hierzu werden beispielsweise Kabelbinder benutzt oder die Kevlarfasern werden gesondert geklemmt.

Aus der GB 2 042 817 A ist eine Zugentlastung für Kabel, insbesondere für Glasfaserkabel mit Kevlar-Fasern, bekannt, wobei die Zugentlastung mindestens zweiteilig ausgebildet ist und ein äußeres Teil und ein inneres Teil aufweist, wobei das innere Teil zu dem äußeren Teil verdrehbar ausgebildet und einen Winkelbereich aufweist, wobei die Zugentlastung einen Anschlag für das Kabel aufweist, wobei das innere Teil eine Aufnahme zum Einlegen mindestens eines Teils des Kabels, insbesondere der Kevlar-Fasern, aufweist, wobei durch eine Drehung des inneren Teils zum äußeren Teil in der Aufnahme eingelegte Teil des Kabels um den Wickelbereich aufwickelbar sind.

Der Erfindung liegt das technische Problem zugrunde, eine verbesserte Zugentlastung für Kabel, insbesondere für Glasfaserkabel mit Kevlar-Fasern, zu schaffen.

Die Lösung des technischen Problems ergibt sich durch den Gegenstand mit den Merkmalen des Anspruchs 1. Weitere vorteilhafte Ausgestaltungen der Erfindung ergeben sich aus den Unteransprüchen.

Hierzu umfasst die Zugentlastung für Kabel, insbesondere für Kevlar-Fasern von Glasfaserkabeln, ein äußeres Teil und ein inneres Teil, wobei das innere Teil eine Aufnahme zum Einlegen der Kevlar-Fasern und einen Wickelbereich aufweist, wobei das innere Teil zu dem äußeren Teil verdrehbar ausgebildet ist. Verdrehbar bedeutet hier allgemein, dass inneres und äußeres Teil relativ zueinander verdrehbar sind, wobei vorzugsweise das äußere Teil fest ist. Hierdurch wird das Kabel einfach und sicher festgehalten. Das Kabel benötigt einen Anschlag, so dass Zug auf die Kevlar-Fasern durch die Wicklung gebracht wird und die Kevlar-Fasern gespannt sind, wodurch die Zugentlastung entsteht. Die Ader oder Faser können beliebiger Natur sein, wobei die Zugentlastung von Kevlar-Fasergeflechten ein bevorzugtes Anwendungsgebiet ist. Prinzipiell kann die Zugentlastung beispielsweise auch für Schirmgeflechte von elektrischen Kabeln verwendet werden.

Dabei wird die Aufnahme durch einen Schlitz im Oberteil des inneren Teils gebildet, der in eine vorzugsweise zylindrische Bohrung übergeht. Die zylindrische Bohrung bewirkt dabei, dass die eingelegte Faser nicht so einfach wieder aus der Aufnahme herausgleiten kann. Das äußere Teil ist im Bereich des Schlitzes bzw. der Bohrung ebenfalls mit einem Schlitz bzw. Freischnitt ausgebildet, so dass die Fasern waagerecht einlegbar sind. Vorzugsweise sind an den Schlitzen bzw. Freischnitten des äußeren Teils Niederhalter angeordnet, die nach innen abgeschrägt sind. Die Niederhalter halten die Kevlar-Fasern unten, so,dass sich diese nicht an vorstehenden Teilen verfahren können, insbesondere an den noch später erläuterten Rastmitteln.

In einer weiteren bevorzugten Ausführungsform weist das äußere Teil mindestens ein Fixiermittel auf, das das Kabel oder einen Teil des Kabels, insbesondere die Kevlar-Fasern, gegen den Wickelbereich drückt. Hierdurch wird ein Zurückdrehen der aufgewickelten Kevlar-Fasern verhindert und gewährleistet, dass die Fasern strammer aufgewickelt werden und damit die erforderliche Selbsthemmung erreicht wird. Das Fixiermittel kann einstückig mit dem äußeren Teil ausgebildet sein oder als separates Bauteil ausgebildet sein. Der Wickelbereich ist vorzugsweise zur Mitte der Mantelfläche konisch ausgebildet.

In einer weiteren bevorzugten Ausführungsform sind das innere Teil und das äußere Teil mit zueinander passenden Rastmitteln ausgebildet, wobei die Anzahl der Rastmittel des inneren Teils unterschiedlich sein kann zu der Anzahl der Rastmittel des äußeren Teils. So kann beispielsweise das äußere Teil eine Rastnase aufweisen und das innere Teil eine Vielzahl von Rastaufnahmen für die Rastnase des äußeren Teils aufweisen oder umgekehrt.

In einer weiteren bevorzugten Ausführungsform sind die Rastmittel des inneren Teils am Umfang des Oberteils oder an der Unterseite eines Unterteils des inneren Teils angeordnet.

In einer weiteren bevorzugten Ausführungsform umfasst das äußere Teil mindestens ein Element, das über das Oberteil des inneren Teils hinausragt und so ein herausrutschen verhindert.

Weiter vorzugsweise ist das Oberteil des inneren Teils mit Ausnehmungen für ein Werkzeug ausgebildet.

In einer weiteren bevorzugten Ausführungsform ist das innere Teil zusätzlich translatorisch zu dem äußeren Teil ausgebildet. Dabei kompensiert die translatorische Bewegung des inneren Teils die Wickellänge der Faser, so dass keine Reservelänge vor dem Wickelvorgang vorgehalten werden muss. Die Bewegung kann dabei beispielsweise über Zahnräder bzw. Rastzähne erfolgen, wobei das äußere Teil beispielsweise im Querschnitt U-förmig ausgebildet ist. Durch die Drehung bewegt sich dann das innere Teil zusätzlich in das äußere Teil hinein.

Die Erfindung wird nachfolgend anhand eines bevorzugten Ausführungsbeispieles näher erläutert. Die Fig. zeigen:
- Fig. 1: eine perspektivische Vorderansicht eines inneren Teils einer Zugentlastung,
- Fig. 2: eine perspektivische Unteransicht des inneren Teils,
- Fig. 3: eine perspektivische Draufsicht auf ein äußeres Teil einer Zugentlastung als Bestandteil eines Glasfaseranschlussmoduls,
- Fig. 4: eine perspektivische Draufsicht auf die zusammengesetzte Zugentlastung,
- Fig. 5: eine perspektivische Vorderansicht eines inneren Teils in einer alternativen Ausführungsform,
- Fig. 6: eine perspektivische Draufsicht auf ein äußeres Teil einer Zugentlastung als Bestandteil eines Glasfaseranschlussmoduls für die alternative Ausführungsform,
- Fig. 7: eine perspektivische Draufsicht auf die zusammengesetzte Zugentlastung der alternativen Ausführungsform,
- Fig. 8: eine perspektivische Draufsicht auf ein äußeres Teil einer Zugentlastung als Bestandteil eines Glasfaseranschlussmoduls für die alternative Ausführungsform mit Niederhaltern und
- Fig. 9: eine schematische Draufsicht auf eine Zugentlastung mit zusätzlicher translatorischer Bewegung zwischen dem inneren und äußeren Teil.

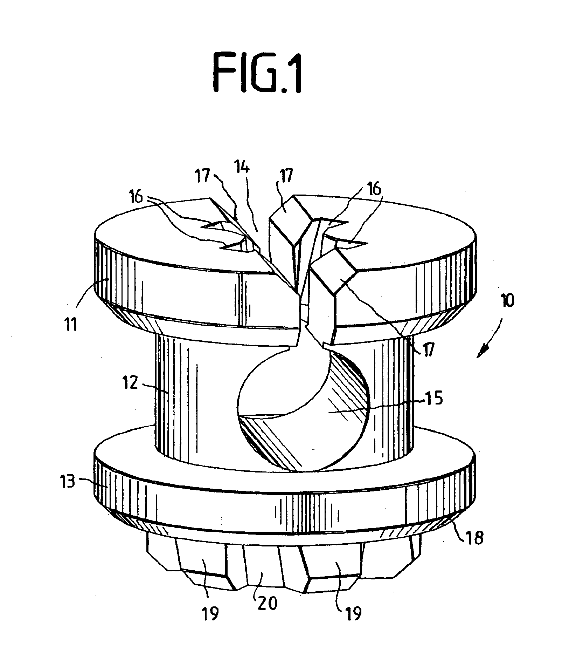

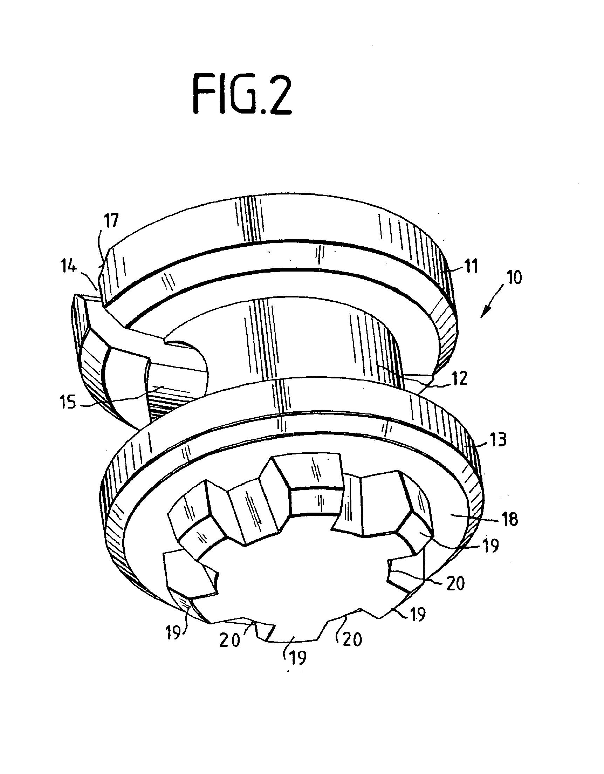

In den Fig. 1 und 2 ist das innere Teil 10 einer Zugentlastung dargestellt. Das innere Teil 10 umfasst ein Oberteil 11, einen Wickelbereich 12 und ein Unterteil 13. In das Oberteil 11 ist ein Schlitz 14 eingebracht, der mittig über den gesamten Durchmesser des kreisrunden Oberteils 11 geht. Der Schlitz 14 geht in eine zylindrische Bohrung 15 über, die durch den Wickelbereich 12 geht, wobei Schlitz 14 und Bohrung 15 zueinander parallel sind. In dem Oberteil 11 sind im Bereich des Schlitzes 14 Ausnehmungen 16 für ein Werkzeug, beispielsweise einen Kreuz-Schlitz-Schraubendreher, vorgesehen. Zum erleichterten Einführen der Fasern weist das Oberteil 11 am Schlitz 14 Schrägen 17 auf. An der Unterseite 18 des Unterteils 13 sind Rastnasen 19 angeordnet, zwischen denen sich Rastaufnahmen 20 bilden.

Der Wickelbereich 12 kann dabei auch zur Mitte der Mantelfläche konisch verlaufen, so dass mittig der Durchmesser kleiner als oben und unten ist.

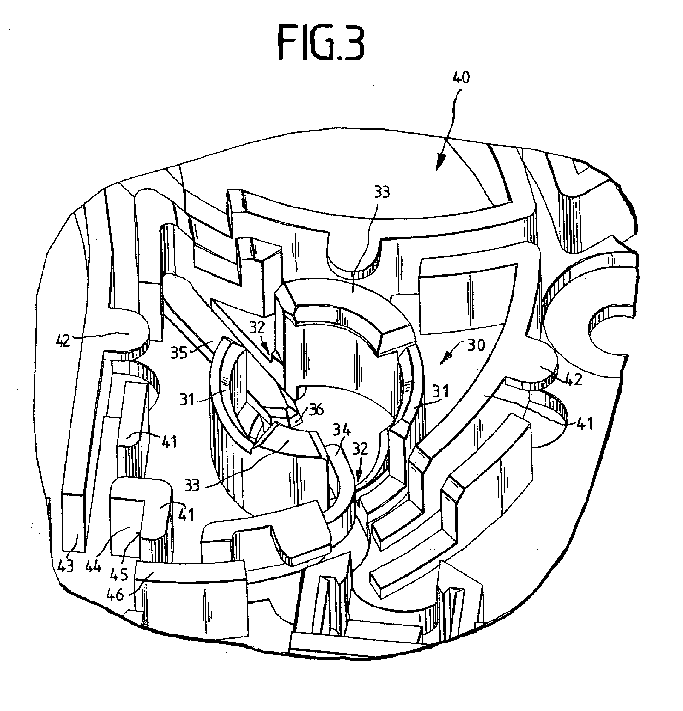

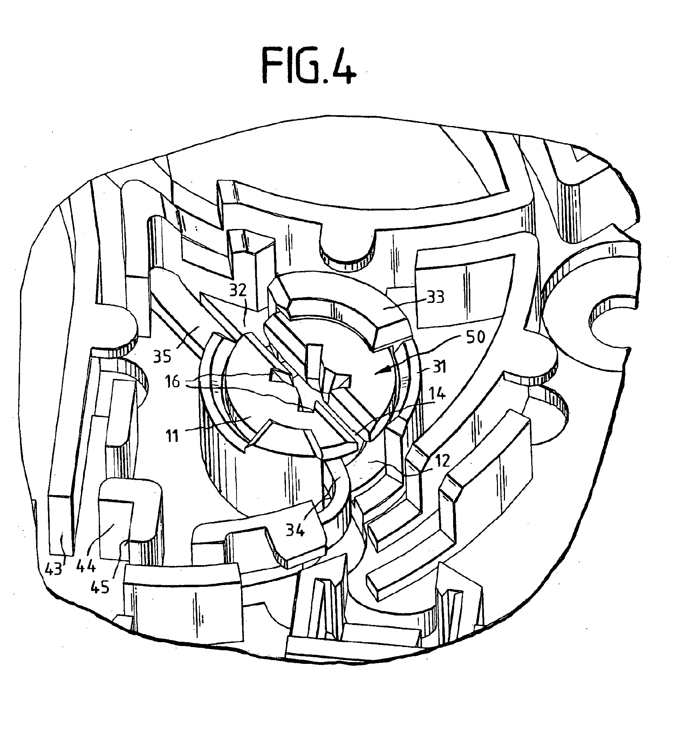

In der Fig. 3 ist ein äußerer Teil 30 der Zugentlastung dargestellt, wobei das äußere Teil 30 integraler Bestandteil eines Glasfaseranschlussmoduls 40 ist. Das Glasfaseranschlussmodul 40 weist dabei verschiedene Faserführungen 41 und Niederhalter 42 auf, die hier jedoch nicht näher erläutert werden sollen. Dabei sei angemerkt, dass die Zugentlastung auch als vollständig separates Bauteil ausgebildet sein kann. Das äußere Teil 30 weist Wände 31 auf, die nahezu einen Zylindermantel bilden, wobei sich nahezu darauf bezieht, dass dieser Zylindermantel Freischnitte 32 aufweist. Auf der Oberseite der Wände 31 sind zwei Elemente 33 angeordnet, die das innere Teil 10 im eingesetzten Zustand überragen (siehe Fig. 4). Weiter weist das äußere Teil 30 ein Fixiermittel 34 in Form eines federnden Steges auf, das durch den einen Freischnitt 32 in das Innere des äußeren Teils 30 hineinragt. Die Höhe des Fixiermittels 34 ist derart gewählt, dass im eingesetzten Zustand des inneren Teils 10 das Fixiermittel 34 gegen den Wickelbereich 12 des inneren Teils 10 drückt. Weiter weist das äußere Teil 30 einen Rastarm 35 auf, der über einen Freischnitt 32 im Bereich der Rastnasen 19 bzw. Rastaufnahmen 20 in das äußere Teil 30 hineinragt, wobei der vordere Teil eine Rastnase 36 bildet, die zu den Rastaufnahmen 20 korrespondiert. Je nach dem, von wo das Kabel eingeführt wird, bilden die Flächen 43 und 44 bzw. 45 und 46 den Anschlag für das Kabel. Hinter den Flächen 43, 44 bzw. 45, 46 wird dann Kabel ohne Mantel geführt, wobei der dickere Kabelmantel an den Flächen 43-46 anschlägt.

In der Fig. 4 ist die zusammengesetzte Zugentlastung 50, bestehend aus innerem Teil 10 und äußerem Teil 30, dargestellt. In der Grundposition, wie in Fig. 4 dargestellt, liegt der Schlitz 14 fluchtend zu den Freischnitten 32. Die Kevlar-Fasern können dann durch den Schlitz 14 in die zylindrische Bohrung 15 eingelegt werden. Durch Drehung des inneren Teils 10 mittels eines Werkzeugs werden die Fasern auf den Wickelbereich 12 aufgewickelt, wobei die Rastnase 36 nacheinander in die Rastaufnahmen 20 des inneren Teils 10 einrastet und so ein Zurückdrehen verhindert. Das Fixierelement 34 presst dabei die Fasern gegen den Wickelbereich 12. Vorzugsweise führt das innere Teil 10 mindestens eine vollständige Umdrehungen aus. Dabei sei angemerkt, dass bei dieser Ausführungsform die Länge der aufgewickelten Fasern als Reservelänge zuvor bereitgestellt werden muss, da ansonsten durch die Drehung auch das Kabel mit hineingezogen werden würde.

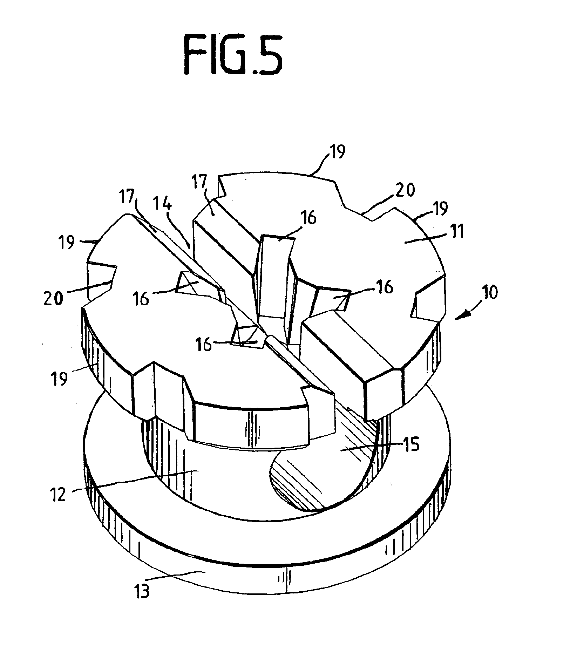

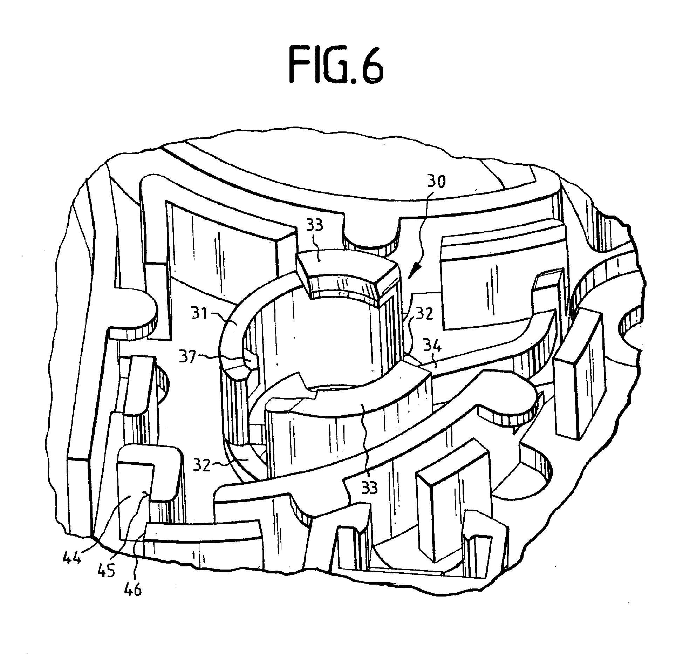

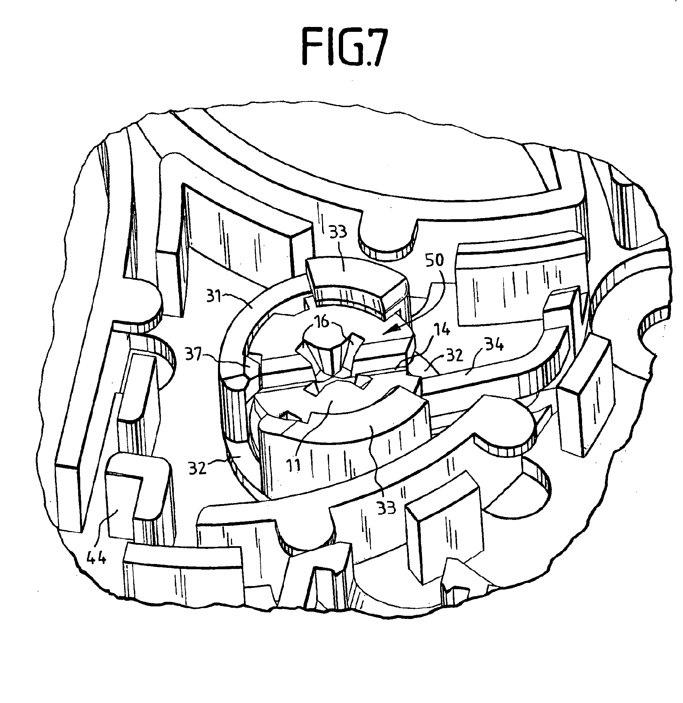

In der Fig. 5 ist ein alternatives Ausführungsbeispiel für das innere Teil 10 dargestellt, wobei für gleiche Teile gleiche Bezugszeichen wie für die Ausführungsform gemäß Fig. 1 und 2 verwendet werden. Der einzige Unterschied ist, dass die Rastnasen 19 und die Rastaufnahmen 20 nicht an der Unterseite 18 des Unterteils 13 angeordnet sind, sondern am Umfang des Oberteils 11. Entsprechend ist das äußere Teil 30 angepasst, was in Fig. 6 dargestellt ist, wobei wieder gleiche Teile mit gleichen Bezugszeichen versehen sind. Der Unterschied ist, dass der Rastarm 35 entfällt und eine Rastnase 37 an einer Wand 31 angeordnet ist, die dann in die Rastaufnahme 20 am Oberteil 11 eingreift. In der Fig. 7 ist schließlich die komplett zusammengesetzte Zugentlastung 50 dargestellt.

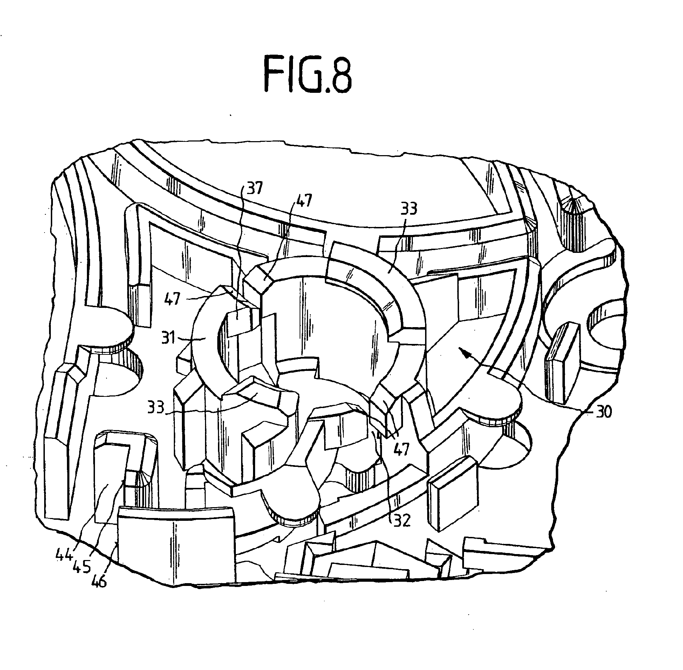

In der Fig. 8 ist eine alternative Ausführungsform für das äußere Teil 30 gemäß Fig. 6 dargestellt, wobei gleiche Elemente mit gleichen Bezugszeichen versehen sind. Im Unterschied zu Fig. 6 sind benachbart links und rechts von den Freischnitten 32 Niederhalter 47 angeordnet, die nach innen zum Freischnitt 32 hin abgeschrägt ausgebildet sind. Durch die Schrägen wird das Einführen der Kevlar-Fasern erleichtert, wobei der enge Abstand zwischen den Niederhaltern 47 unterhalb der Schrägen ein Hochrutschen der Kevlar-Fasern verhindert, so dass diese sich nicht in den Rastnasen des inneren Teils 10 verfangen können. Entsprechend kann auf das Fixiermittel 34 verzichtet werden.

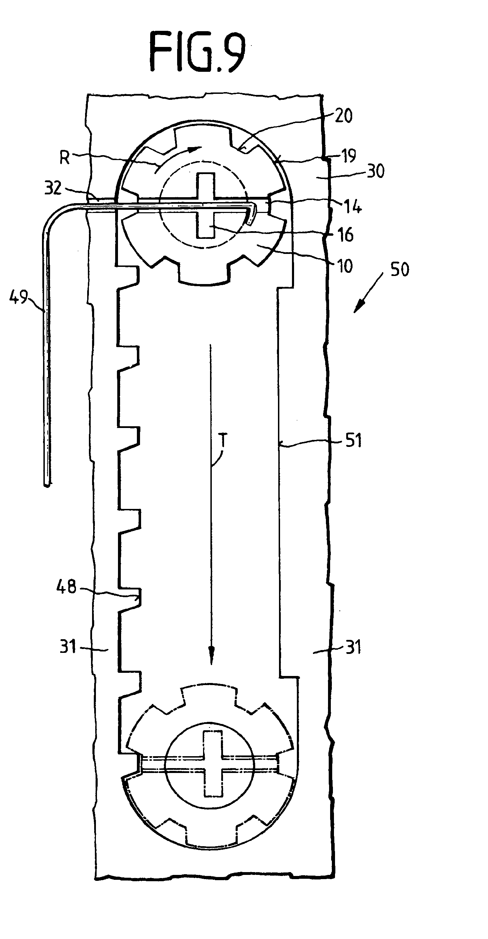

In der Fig. 9 ist eine Ausführungsform einer Zugentlastung 50 mit rotatorischer und translatorischer Bewegung des inneren Teils 10 zum äußeren Teil 30 dargestellt. Das innere Teil 10 ist im Wesentlichen wie in Fig. 5 dargestellt ausgebildet, wobei die Ausnehmungen 16 zur Aufnahme eines Schlitz-Schraubendrehers dienen. Der Pfeil R deutet die Rotationsrichtung des inneren Teils 10 an. Das äußere Teil 30 ist wannenförmig ausgebildet, so dass sich zwischen den Wänden 31 eine Vertiefung bildet, in der das innere Teil 10 sich befindet. Das äußere Teil 30 weist also einen im Wesentlichen U-förmgien Querschnitt auf. An den Innenseiten der linken Wand 31 sind Rastzähne 48 angeordnet. Im oberen Bereich der linken Wand 31 ist ein Schlitz bzw. Freischnitt 32 dargestellt, durch den Kevlar-Fasern 49 eingelegt werden können. Die Kevlar-Fasern 49 werden dann durch den Freischnitt 32 und den Schlitz 14 des inneren Teils 10 eingelegt. Wird dann das innere Teil 10 in Richtung R gedreht, so rollt dieses mit seinen Rastnasen 19 bzw. Rastaufnahmen 20 an den Rastzähnen 48 des äußeren Teils 30 ab. Diese Abrollbewegung führt zu einer Translationsbewegung mit der Translationsrichtung T. Die Translationsbewegung gleicht dabei die Verkürzung der Kevlar-Fasern aufgrund der Wickelbewegung um das innere Teil aus, so dass keine Reservelänge vorgehalten werden muss. Die Endstellung des inneren Teils 10 ist dabei gestrichelt dargestellt. In der Fig. 9 sind die Rastzähne 48 unsymmetrisch ausgebildet, um ein Zurückgleiten des inneren Teils 10 zu verhindern. Dabei ist die obere Flanke der Rastzähne 48 steiler (nahezu 90°) angestellt als die untere Flanke. Alternativ können auch weitere Mittel zum Sichern des inneren Teils 10 vorgesehen sein, die ein selbsttätiges Zurückdrehen verhindern. Weiter können Mittel vorgesehen sein, die entsprechend den Elementen 33 (siehe z.B. Fig. 8) eine Hubbewegung des inneren Teils 10 verhindern. Dies ist vorliegend eine mindestens teilweise die Vertiefung des äußeren Teils 30 überdeckende Blende 51.

### Bezugszeichenliste

- 10: inneres Teil
- 11: Oberteil
- 12: Wickelbereich
- 13: Unterteil
- 14: Schlitz
- 15: Bohrung
- 16: Ausnehmungen
- 17: Schrägen
- 18: Unterseite
- 19: Rastnasen
- 20: Rastaufnahmen
- 30: äußeres Teil
- 31: Wände
- 32: Freischnitte
- 33: Elemente
- 34: Fixiermittel
- 35: Rastarm
- 36: Rastnase
- 37: Rastnase
- 40: Glasfaseranschlussmodul
- 41: Faserführungen
- 42: Niederhalter
- 43: Fläche
- 44: Fläche
- 45: Fläche
- 46: Fläche
- 47: Niederhalter
- 48: Rastzähne
- 49: Kevlar-Fasern
- 50: Zugentlastung
- 51: Blende
- R: Rotationsrichtung
- T: Translationsrichtung

## Patentansprüche

1. Zugentlastung (50) für Kabel, insbesondere für Glasfaserkabel mit Kevlar-Fasern, wobei die Zugentlastung (50) mindestens zweiteilig ausgebildet ist und ein äußeres Teil (30) und ein inneres Teil (10) aufweist, wobei das innere Teil (10) zu dem äußeren Teil (30) verdrehbar ausgebildet und einen Wickelbereich (12) aufweist, wobei die Zugentlastung (50) einen Anschlag (43, 44; 45, 46) für das Kabel aufweist, wobei das innere Teil (10) eine Aufnahme zum Einlegen mindestens eines Teils des Kabels, insbesondere der Kevlar-Fasern aufweist, wobei durch eine Drehung des inneren Teils (10) zum äußeren Teil (30) in der Aufnahme eingelegte Teil des Kabels um den Wickelbereich (12) aufwickelbar sind,
**dadurch gekennzeichnet, dass**
die Aufnahme durch einen Schlitz (14) im Oberteil (11) des inneren Teils (10) gebildet wird, der in eine Bohrung (15) übergeht und das äußere Teil (30) mit mindestens einem Schlitz bzw. Freischnitt (32) ausgebildet ist, sodass die Fasern waagerecht einlegbar sind.

2. Zugentlastung nach Anspruch 1, **dadurch gekennzeichnet, dass** an dem Schlitz bzw. Freischnitt (32) Niederhalter (47) angeordnet sind.

3. Zugentlastung nach einem der vorangegangenen Ansprüche, **dadurch gekennzeichnet, dass** das äußere Teil (30) mindestens ein Fixiermittel (34) aufweist, das das Kabel oder einen Teil des Kabels gegen den Wickelbereich (12) drückt.

4. Zugentlastung nach einem der vorangegangenen Ansprüche, **dadurch gekennzeichnet, dass** das innere Teil (10) und das äußere Teil (30) mit zueinander passenden Rastmitteln (19, 20; 36, 37) ausgebildet sind.

5. zugentlastung nach Anspruch 4, **dadurch gekennzeichnet, dass** die Rastmittel (19, 20) des inneren Teils (10) am Umfang des Oberteils (11) oder an der Unterseite (18) des inneren Teils (10) angeordnet sind.

6. Zugentlastung nach einem der vorangegangenen Ansprüche, **dadurch gekennzeichnet, dass** das äußere Teil (30) Elemente (33) umfasst, die über das Oberteil (11) des inneren Teils (10) ragen.

7. Zugentlastung nach einem der vorangegangenen Ansprüche, **dadurch gekennzeichnet, dass** das Oberteil (11) des inneren Teils (10) mit Ausnehmungen (16) für ein Werkzeug ausgebildet ist.

8. Zugentlastung nach einem der vorangegangenen Ansprüche, **dadurch gekennzeichnet, dass** das innere Teil (10) zusätzlich translatorisch beweglich zu dem äußeren Teil (30) ausgebildet ist.

## Claims

1. Strain relief means (50) for cables, in particular for fibre optic cables having Kevlar fibres, wherein the strain relief means (50) is formed in at least two parts and has an outer part (30) and an inner part (10), wherein the inner part (10) is formed in a rotatable manner with respect to the outer part (30) and has a winding region (12), wherein the strain relief means (50) has a stop (43, 44; 45, 46) for the cable, wherein the inner part (10) has a receptacle for inserting at least a part of the cable, in particular the Kevlar fibres, wherein that part of the cable that is inserted in the receptacle is windable around the winding region (12) by rotation of the inner part (10) with respect to the outer part (30),
**characterized in that**
the receptacle is formed by a slot (14) in the top part (11) of the inner part 10), said slot merging into a bore (15), and the outer part (30) is formed with at least one slot or cut-free portion (32), so that the fibres are insertable horizontally.

2. Strain relief means according to Claim 1, **characterized in that** retaining means (47) are arranged at the slot or cut-free portion (32).

3. Strain relief means according to either of the preceding claims, **characterized in that** the outer part (30) has at least one fixing means (34) which presses the cable or a part of the cable against the winding region (12).

4. Strain relief means according to one of the preceding claims, **characterized in that** the inner part (10) and the outer part (30) are formed with latching means (19, 20; 36, 37) which fit one another.

5. Strain relief means according to Claim 4, **characterized in that** the latching means (19, 20) of the inner part (10) are arranged on the circumference of the top part (11) or on the underside (18) of the inner part (10).

6. Strain relief means according to one of the preceding claims, **characterized in that** the outer part (30) comprises elements (33) which protrude beyond the top part (11) of the inner part (10).

7. Strain relief means according to one of the preceding claims, **characterized in that** the top part (11) of the inner part (10) is formed with cutouts (16) for a tool.

8. Strain relief means according to one of the preceding claims, **characterized in that** the inner part (10) is additionally formed so as to be movable in translation with respect to the outer part (30).

## Revendications

1. Ensemble (50) de délestage de câble, en particulier de câbles en fibres de verre présentant des fibres de kevlar,
l'ensemble (50) de délestage de câble étant configuré en au moins deux parties et présentant une partie extérieure (30) et une partie intérieure (10),
la partie intérieure (10) pouvant tourner autour de la partie extérieure (30) et présentant une zone d'enroulement (12),
l'ensemble (50) de délestage de câble présentant une butée (43, 44; 45, 46) pour le câble, la partie intérieure (10) présentant un logement dans lequel au moins une partie du câble et en particulier des fibres de kevlar peuvent être placées,
une rotation de la partie intérieure (10) par rapport à la partie extérieure (30) permettant à la partie du câble insérée dans le logement de tourner autour de la partie d'enroulement (12),
**caractérisé en ce que**
le logement est formé par une fente (14) ménagée dans la partie supérieure (11) de la partie intérieure (10) qui se prolonge en un alésage (15) et
**en ce que** la partie extérieure (30) est configurée avec au moins une fente ou découpe (32) de telle sorte que les fibres puissent être insérées à l'horizontale.

2. Ensemble de délestage de câble selon la revendication 1, **caractérisé en ce que** des supports (47) sont disposés sur la fente ou la découpe (32).

3. Ensemble de délestage de câble selon l'une des revendications précédentes, **caractérisé en ce que** la partie extérieure (30) présente au moins un moyen de fixation (34) qui repousse le câble ou une partie du câble contre la partie d'enroulement (12).

4. Ensemble de délestage de câble selon l'une des revendications précédentes, **caractérisé en ce que** la partie intérieure (10) et la partie extérieure (30) sont configurées avec des moyens d'encliquetage (19, 20; 36, 37) mutuellement complémentaires.

5. Ensemble de délestage de câble selon la revendication 4, **caractérisé en ce que** les moyens d'encliquetage (19, 20) de la partie intérieure (10) sont disposés autour de la partie supérieure (11) ou sur le côté inférieur (18) de la partie intérieure (10) .

6. Ensemble de délestage de câble selon l'une des revendications précédentes, **caractérisé en ce que** la partie extérieure (30) comporte des éléments (33) qui débordent au-delà de la partie supérieure (11) de la partie intérieure (10).

7. Ensemble de délestage de câble selon l'une des revendications précédentes, **caractérisé en ce que** la partie supérieure (11) de la partie intérieure (10) est configurée avec des découpes (16) permettant l'insertion d'un outil.

8. Ensemble de délestage de câble selon l'une des revendications précédentes, **caractérisé en ce que** la partie intérieure (10) est de plus configurée pour pouvoir être déplacée en translation par rapport à la partie extérieure (30).
